# EUROPÄISCHE PATENTSCHRIFT

(11) **EP 2 638 256 B1**
(45) Veröffentlichungstag und Bekanntmachung des Hinweises auf die Patenterteilung: **16.07.2014**
(21) Anmeldenummer: 11748378.4
(22) Anmeldetag: 23.08.2011
(51) Int. Cl.: F01L 1/344, F01L 1/352

(54) **NOCKENWELLENVERSTELLER FÜR EINE BRENNKRAFTMASCHINE**
CAMSHAFT ADJUSTER FOR AN INTERNAL COMBUSTION ENGINE
DISPOSITIF DE RÉGLAGE D'ARBRE À CAMES POUR MOTEUR À COMBUSTION INTERNE

(30) Priorität: 11.11.2010 DE 102010051051
(43) Veröffentlichungstag der Anmeldung: 18.09.2013
(73) Patentinhaber: Schaeffler Technologies GmbH & Co. KG, 91074 Herzogenaurach (DE)
(72) Erfinder: BRAUN, Armin, 96155 Buttenheim (DE)
(86) Internationale Anmeldenummer: PCT/EP2011/064479
(87) Internationale Veröffentlichungsnummer: WO 2012/062492

(56) Entgegenhaltungen:
- EP-A2- 1 715 143
- WO-A1-95/00748
- WO-A1-2004/035997
- WO-A1-2005/080757
- DE-A1- 10 323 705
- DE-A1-102009 037 403

## Beschreibung

### Gebiet der Erfindung

Die Erfindung betrifft einen Nockenwellenversteller für eine Brennkraftmaschine, umfassend ein mit einer Kurbelwelle drehfest verbindbares Antriebsrad, ein relativ zu diesem um eine Drehachse drehbar angeordnetes, innenverzahntes Abtriebsrad, sowie einen Adapter, der am Innenumfang des Abtriebsrads angeordnet ist und über den das Abtriebsrad drehfest mit einer Nockenwelle verbindbar ist.

### Hintergrund der Erfindung

Ein Nockenwellenversteller dient der gezielten Verstellung der Phasenlage zwischen einer Nockenwelle und einer Kurbelwelle in einer Brennkraftmaschine und ermöglicht so die optimierte Einstellung der Ventilsteuerzeiten über die Motorlast und die Motordrehzahl. Damit kann eine deutliche Absenkung des Kraftstoffverbrauchs und der Abgasemissionen sowie eine Leistungssteigerung des Motors erreicht werden.

Im Zuge der Entwicklung sparsamer und emissionsarmer Brennkraftmaschinen werden alternativ zu den hydraulischen Nockenwellenverstellern auch elektromechanische Nockenwellenversteller eingesetzt. Bei elektrischen Nockenwellenverstellern dient üblicherweise ein mit einer Verstellwelle in Antriebsverbindung stehender elektrischer Verstellmotor als ein sogenanntes Verstellglied. Als Getriebe werden dazu üblicherweise Dreiwellengetriebe eingesetzt. Der Antrieb erfolgt hierbei über ein kurbelwellenfestes Antriebsrad und eine Antriebswelle, während der Abtrieb über eine Abtriebswelle und ein drehfest mit einer Nockenwelle verbundenes Abtriebsrad erfolgt. Die Verstellleistung wird von dem elektrischen Verstellmotor über eine Verstellwelle in das Dreiwellengetriebe eingekoppelt und bewirkt eine Drehung des Abtriebsrads relativ zum Antriebsrad. Über die Relativdrehung der beiden Räder zueinander kann die Phasenlage zwischen der Kurbelwelle und der Nockenwelle verstellt werden.

Aus der DE 10 2008 019 586 ist ein Nockenwellenversteller der eingangs genannten Art als Teil einer Nockenwellenverstellvorrichtung bekannt. Die Nockenwellenverstellvorrichtung bzw. der Nockenwellenversteller umfasst ein Antriebsrad und ein Abtriebsrad, die relativ zueinander drehbar angeordnet sind. Das Antriebsrad ist hierzu als ein Hohlrad ausgebildet, in welches das Abtriebsrad eingesteckt ist. Das Abtriebsrad ist an seinem Innenumfang mit einer Innenverzahnung sowie mit einem der Innenverzahnung benachbarten ringförmigen Aufnahmeabschnitt ausgebildet. Der Aufnahmeabschnitt dient der Aufnahme und Positionierung eines Adapters, über welchen das Abtriebsrad drehfest mit einer Nockenwelle verbunden ist. Hierzu ist der Adapter in das Abtriebsrad eingesetzt und dort innerhalb des Aufnahmeabschnitts drehfest verschweißt.

Diese Ausgestaltung ermöglicht zwar eine sichere Positionierung des Adapters, allerdings muss der Innenumfang des Abtriebsrads aufwändig bearbeitet werden, um den benötigten Aufnahmeabschnitt für den Adapter zur Verfügung zu stellen.

### Aufgabe der Erfindung

Es ist demnach eine Aufgabe der Erfindung, einen gegenüber dem Stand der Technik verbesserte Nockenwellenversteller anzugeben, der unter Erhalt seiner Funktion mit möglichst geringem Aufwand hergestellt werden kann.

### Lösung der Aufgabe

Die Aufgabe der Erfindung wird erfindungsgemäß gelöst durch einen Nockenwellenversteller für eine Brennkraftmaschine, umfassend ein mit einer Kurbelwelle drehfest verbindbares Antriebsrad, ein relativ zu diesem um eine Drehachse drehbar angeordnetes, innenverzahntes Abtriebsrad, sowie einen Adapter, der am Innenumfang des Abtriebsrads angeordnet ist und über den das Abtriebsrad drehfest mit einer Nockenwelle verbindbar ist. Hierbei ist vorgesehen, dass der Adapter über die Innenverzahnung am Innenumfang des Abtriebsrads befestigt ist.

Die Erfindung berücksichtigt, dass zum störungsfreien Betrieb eines Nockenwellenverstellers die verlässliche Drehmomentübertragung zwischen Antrieb und Abtrieb gewährleistet sein muss. Hierzu wird bei elektromechanischen Nockenwellenverstelllern üblicherweise ein Antriebsrad auf einem Abtriebsrad gelagert, welches wiederum mittels eines Adapters mit einer Nockenwelle verbunden ist.

Der Adapter selbst wird hierbei typischerweise innerhalb des Abtriebsrads an dessen Innenumfang angeordnet, wozu bislang ein separat hierfür vorgesehener Ausnahmeabschnitt am Innenumfang bereit gestellt wird. Dies ist im Hinblick auf den mit der Herstellung verbundenen Aufwand und die dabei anfallenden Kosten nicht wünschenswert.

Die Erfindung erkennt, dass diese Problematik überraschend durch eine Befestigung des Adapters über die Innenverzahnung des Abtriebsrads an dessen Innenumfang überwunden wird. Hierdurch kann die bislang notwendige zusätzliche Bearbeitung des Innenumfangs des Abtriebsrads zur Befestigung des Adapters entfallen. Der Adapter kann am Abtriebsrad angeordnet werden, ohne dass die Einbringung eines extra hierfür vorgesehenen Aufnahmeabschnitts am Innenumfang des Abtriebsrad notwendig ist.

Mit anderen Worten kann auf diese Weise ein bereits vorhandenes und funktionsnotwendiges Merkmal des Abtriebsrads, nämlich die Innenverzahnung an dessen Innenumfang, ausgenutzt werden, um den Adapter anzuordnen und zu befestigen.

Das Antriebsrad ist insbesondere als ein Hohlrad ausgebildet und weist eine Innenverzahnung auf, die teilweise oder durchgängig an dessen Innenumfang ausgebildet sein kann. Der Antrieb des Antriebsrads kommt über die drehfeste Verbindung mit einer Kurbelwelle zustande. Hierzu kann das Antriebsrad beispielsweise als ein Kettenrad ausgebildet sein, wobei die drehfeste Verbindung mit der Kurbelwelle über eine Kette erreicht wird. Alternativ kann das Abtriebsrad auch als ein Riemenrad ausgeführt sein und entsprechend über einen Riementrieb angetrieben werden. Am Innenumfang des Antriebsrads ist üblicherweise das Abtriebsrad angeordnet, wobei das Antriebsrad auf dem Abtriebsrad gelagert werden kann.

Das Abtriebsrad ist vorzugsweise ebenfalls als ein Hohlrad ausgebildet und weist eine Innenverzahnung auf. Die Innenverzahnung wird bei der Herstellung des Abtriebsrads mittels eines sogenannten Räumprozesses in den Innenumfang eingebracht. Hierzu wird eine Räumnadel mit einer entsprechenden Kontur durch eine bereits im Abtriebsrad eingebrachte Bohrung gezogen oder gedrückt. Der Querschnitt der Räumnadel entspricht hierbei der Kontur der nach dem Räumprozess am Innenumfang des Abtriebsrads ausgebildeten Innenverzahnung. Die Innenverzahnung kann im eingebauten Zustand zusammen mit der Innenverzahnung eines Abtriebsrads ein Verstellgetriebe bilden, welches beispielsweise über ein Stirnrad eines Wellengetriebes angetrieben werden kann. Hierzu steht dann nur ein Teil der Innenverzahnung des Abtriebsrads zur Verfügung, da im montierten Zustand am Innenumfang des Abtriebsrads der Adapter angeordnet ist.

Zur Positionierung des Adapters ist dieser zweckmäßigerweise mit einem Außendurchmesser ausgebildet, der entsprechend auf den Innendurchmesser des Abtriebsrads abgestimmt ist. Beispielsweise ist der Adapter mit einem kreisrunden Querschnitt ausgebildet sein. Der Adapter kann in das Abtriebsrad eingeschoben und dort befestigt werden, so dass er mit seinem Außenumfang am Innenumfang des Abtriebsrads, bzw. an der dortigen Innenverzahnung zur Anlage kommt. Alternativ ist es auch denkbar, dass der Adapter mit einer Gegenverzahnung ausgebildet ist, die in die Innenverzahnung des Abtriebsrads eingreift und den Adapter so positioniert.

Der Adapter kann beispielsweise als ein im Wesentlichen flacher Abschlussdeckel ausgebildet sein. Er ist vorzugsweise mit einer Zentralbohrung ausgebildet, durch die eine Zentralschraube zur Befestigung der einzelnen Bauteile eines Nockenwellenverstellers aneinander hindurchgeführt werden kann. Der Adapter kann bei der Montage des Nockenwellenverstellers über die Befestigung der Zentralschraube in der Bohrung an der Stirnseite der Nockenwelle verschraubt werden. Zur drehfesten Fixierung an der Nockenwelle kann der Adapter weiterhin Ausnehmungen aufweisen, in die an einem stirnseitigen Ende der Nockenwelle ausgebildete Befestigungselemente eingreifen können.

In einer vorteilhaften Ausgestaltung der Erfindung ist der Adapter auf dem Kopfkreis der Innenverzahnung des Abtriebsrads eingepresst. Der Kopfkreisdurchmesser bezeichnet bei Zahnrädern typischerweise den Außendurchmesser des Zahnkreises, also den Durchmesser, der durch die Enden der Zähne gegeben ist. Das Einpressen des Adapters auf dem Kopfkreis ermöglicht dessen einfache Anordnung am Innenumfang des Abtriebsrads, da der Aufnahmeabschnitt bzw. der Einpressabschnitt durch die bereits vorhandene Innenverzahnung zur Verfügung gestellt wird. Der Einpressdurchmesser des Einpressabschnitts für den Adapter entspricht somit dem Kopfkreisdurchmesser der Innenverzahnung. Eine Bearbeitung des Einpressabschnitts kann entfallen. Der Außendurchmesser des Adapters ist hierbei annähernd gleich groß wie der durch den Kopfkreisdurchmesser des Abtriebsrads.

Die durch das Einpressen hergestellte Verbindung kann grundsätzlich entweder von fester oder beweglicher Gestalt sein. Über die Wirkflächen der Verbindung, also die Kontaktstellen zwischen den Zahnenden und dem Außenumfang des Adapters, können die im Betrieb der Nockenwellenerstellvorrichtung auftretenden Betriebskräfte übertragen werden. Weiterhin verbleiben beim Einpressen des Adapters auf dem Kopfkreis der Innenverzahnung Freiräume zwischen den Zähnen und dem Außenumfang des Adapters. Diese Zahnfreiräume können zur Schmierung der Verzahnung genutzt werden.

In einer weiter vorteilhaften Ausgestaltung der Erfindung ist die Innenverzahnung axial durchgängig am Abtriebsrad ausgebildet. Die durchgängige Geometrie der Innenverzahnung ermöglicht eine einfache Herstellung bzw. Einbringung der Innenverzahnung am Innenumfang des Abtriebsrads. Da ein separater Aufnahmeabschnitt bzw. Einpressabsatz für den Adapter nicht notwendig ist, ergibt sich am Innenumfang eine vergrößerte Räumlänge bei der Einbringung der Innenverzahnung. Hierdurch ist eine sichere Führung der verwendeten Räumnadel gewährleistet.

Zusätzlich kann durch diese Ausgestaltung Material bei der Fertigung des Adapters gespart werden. Durch die Befestigung über die Innenverzahnung und den damit verbundenen Wegfall eines separaten Aufnahmeabschnitts kann der Adapter mit einem geringeren Außendurchmesser gefertigt werden, der in etwa dem Kopfkreisdurchmesser des Abtriebsrads entspricht und dementsprechend kleiner gegenüber bislang verwendeten Adaptern ist.

Weiterhin wird durch die durchgängige Ausbildung der Innenverzahnung der Traganteil der Innenverzahnung erhöht, woraus beispielsweise eine Verlängerung der Lebensdauer resultiert. Da die Innenverzahnung am gesamten Innenumfang des Abtriebsrads ausgebildet ist, liegt entsprechend der Zahnradauslauf im montierten Zustand axial endseitig hinter dem Adapter.

Bevorzugt ist der Adapter mit dem Abtriebsrad verschweißt, woraus eine sichere Verbindung der beiden Bauteile resultiert. Der Adapter und das Abtriebsrad sind insbesondere an den Kontaktstellen zwischen den Zahnenden und dem Außenumfang des Adapters segmentweise verschweißt, so dass die Zahnfreiräume auch nach dem Verschweißen für Schmiermittel zur Verfügung stehen. Vorliegend bietet sich insbesondere ein Laserschweißen an, welches aufgrund hoher Schweißgeschwindigkeit, einer schmalen Schweißnahtform und einem geringen thermischem Verzug die geforderte Präzision beim Verbinden der Bauteile ermöglicht.

Zweckmäßigerweise ist der Adapter als ein Abschlussdeckel ausgebildet. Durch die Ausgestaltung als Abschlussdeckel kann der Adapter im eingebauten Zustand zusätzlich zur Drehmomentübertragung zwischen einer Nockenwelle und einer Kurbelwelle das Verstellgetriebe an der der Nockenwelle axial zugewandten Seite abschließen. Der Nockenwellenversteller ist so beispielsweise gegen äußere Einflüsse wie Verunreinigungen oder auch gegen Leckagen geschützt.

In einer vorteilhaften Ausgestaltung der Erfindung ist das Antriebsrad als ein Hohlrad ausgebildet und auf dem Abtriebsrad gelagert. Hierbei eignet sich insbesondere eine Gleitlagerung, bei welcher die beiden sich relativ zueinander bewegenden Bauteile direkt miteinander in Kontakt stehen. Sie gleiten aufeinander gegen den durch die Gleitreibung verursachten Widerstand. Dieser Widerstand kann beispielsweise durch die Wahl reibungsarmer Materialpaarungen oder durch eine Schmierung verringert werden kann. Eine Gleitlagerung bietet sich insbesondere an, da hierbei kein zusätzlicher Bauraum zur Verfügung gestellt werden muss.

Zweckmäßigerweise ist eine Anschlagskomponente für die Nockenwelle umfasst, die axial am Antriebsrad gegengelagert ist. Bevorzugt ist die Anschlagskomponente als ein Anschlagsring mit einer Anschlagsfläche für eine Nockenwelle ausgebildet. Die Anschlagsfläche kann beispielsweise mit einem Vorsprung ausgebildet sein, in die eine Ausnehmung an der Stirnseite der Nockenwelle eingreifen kann. Alternativ kann auch eine Anschlagsfläche am Abtriebsrad selbst vorgesehen sein. In jedem Fall wird durch die Anschlagsfläche eine Drehwinkelbegrenzung zwischen dem Antriebsrad und dem mittels des Adapters drehfest mit der Nockenwelle verbundenen Abtriebsrad erreicht.

Um eine sichere Befestigung der Bauteile aneinander zu gewährleisten, sind die Anschlagskomponente und das Antriebsrad vorzugsweise zumindest teilweise, also insbesondere an im Bereich der Gegenlagerung, miteinander verschweißt. Durch diese Befestigung ist die Anschlagskomponente drehfest mit dem Antriebsrad verbunden. Alternativ sind beispielsweise auch andere Befestigungsmöglichkeit, wie ein Verstemmen oder Verschrauben denkbar.

### Kurze Beschreibung der Zeichnung

Im Folgenden werden Ausführungsbeispiele der Erfindung anhand einer Zeichnung näher erläutert. Dabei zeigt:
- Fig. 1: ein Abtriebsrad in einer dreidimensionalen Darstellung,
- Fig. 2: das Abtriebsrad gemäß Fig. 1 in einem Längsschnitt,
- Fig. 3: das Abtriebsrad gemäß Fig. 1 mit einem Adapter in einem Längsschnitt,
- Fig. 4: eine Draufsicht auf das Abtriebsrad mit dem Adapter gemäß Fig. 3,
- Fig. 5: einen Ausschnitt des Abtriebsrads mit dem Adapter gemäß Fig. 3, sowie
- Fig. 6: einen Nockenwellenversteller mit einem Antriebsrad, sowie mit dem Abtriebsrad und dem Adapter gemäß den Fig. 3 bis 5 in einem Längsschnitt.

### Ausführliche Beschreibung der Zeichnung

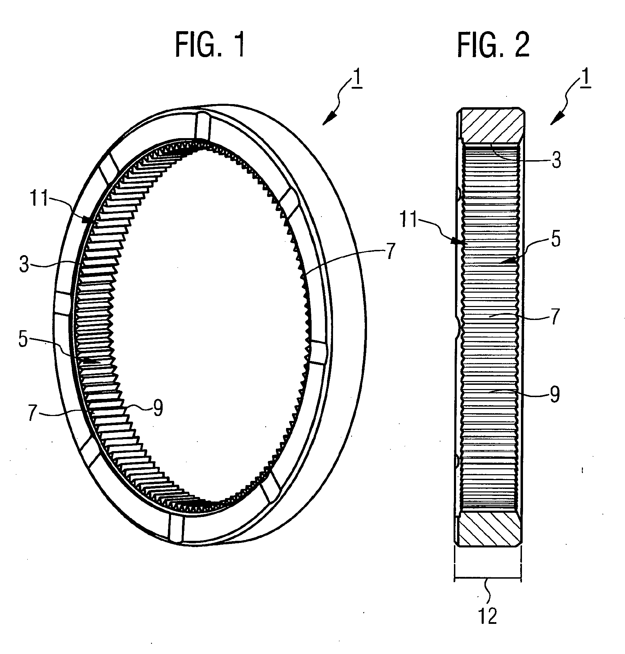

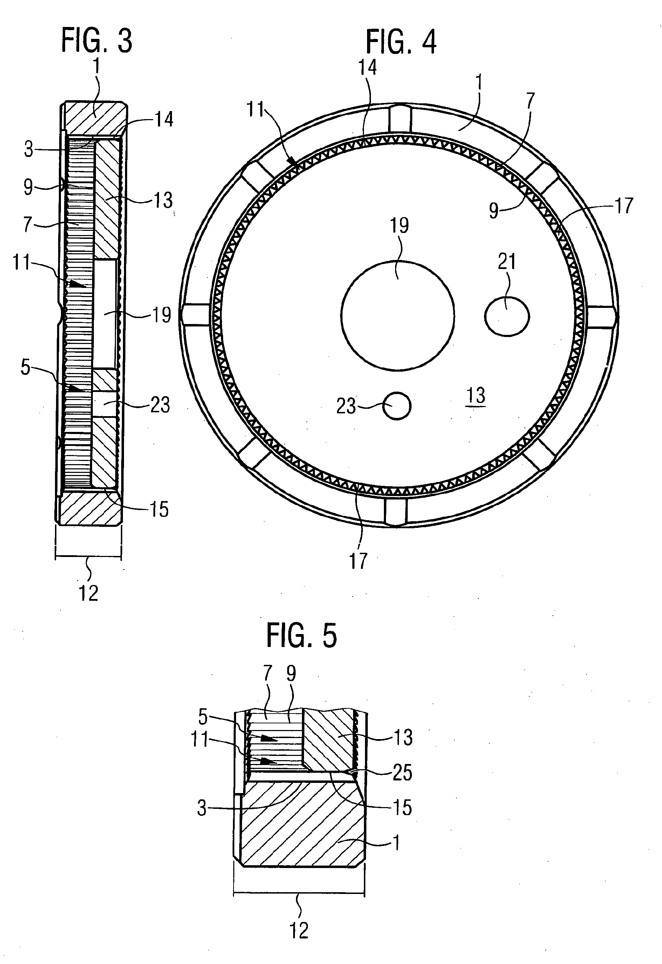

Fig. 1 zeigt ein Abtriebsrad 1 in einer dreidimensionalen Darstellung. Das Abtriebsrad 1 ist ringförmig als ein Hohlrad ausgebildet und weist an seinem Innenumfang 3 eine Innenverzahnung 5 auf. Über diese Innenverzahnung 5 kann im montierten Zustand ein Adapter am Abtriebsrad 1 befestigt werden. Eine detaillierte Beschreibung hierzu findet sich in den Fig. 3 bis 6.

Die Innenverzahnung 5 ist sowohl axial durchgängig am Innenumfang 3 des Abtriebsrads 1 als auch umlaufend an dessen gesamten Innenumfang 3 ausgebildet. Hieraus resultiert eine durchgängige Geometrie, die es ermöglicht, die Innenverzahnung 5 auf einfache Weise mittels eines Räumprozesses in den Innenumfang 3 des Abtriebsrads 1 einzubringen. Da ein separater Aufnahmeabschnitt für einen Adapter nicht notwendig ist, wird die Herstellung der Innenverzahnung 5 erleichtert. Es ergibt sich am Innenumfang 3 eine vergrößerte Räumlänge, die eine sichere Führung der zur Räumung eingesetzten Räumnadel ermöglicht.

Beim Räumen wird zur Einbringung der Innenverzahnung 5 eine Räumnadel mit einer entsprechenden Kontur durch eine Bohrung im Abtriebsrad 1 gezogen. Die Räumnadel hat hierbei einen Querschnitt, der der Kontur der nach dem Räumen am Innenumfang 3 ausgebildeten Innenverzahnung 5 des Abtriebsrads 1 entspricht.

Die nach dem Räumen ausgebildete Innenverzahnung 5 besteht aus einer Anzahl von einander entlang des Umfangs benachbarten Zähnen 7. Durch die sich radial von Abtriebsrad 1 nach innen erstreckenden Enden 9 der Zähne 7 ist der Durchmesser des Kopfkreises 11 der Innenverzahnung 5 vorgegeben. Die Zähne 7 erstrecken sich im Abtriebsrad 1 vom Innenumfang 3 aus alle gleich weit radial nach innen.

In Fig. 2 ist das Abtriebsrad gemäß Fig. 1 in einem Längsschnitt gezeigt. Anhand dieser Darstellung ist die axial durchgängige, also über die komplette axiale Breite 12 des Abtriebsrads 1 ausgebildete Innenverzahnung 5 gut zu erkennen. Diese Ausgestaltung ist möglich, da zur Anbringung bzw. Befestigung eines Adapters kein separater Aufnahmeabschnitt notwendig ist. Der Außendurchmesser im zur Befestigung für einen Adapter vorgesehenen Bereich entspricht also dem Durchmesser des Kopfkreises 11 der Innenverzahnung 5. Eine zur Einbringung der Innenverzahnung 5 eingesetzte Räumnadel ist so über die komplette axiale Breite 12 des Abtriebsrads 1 sicher geführt ist.

In Fig. 3 ist das Abtriebsrad 1 gemäß Fig. 1 mit einem Adapter 13 in einem Längsschnitt zu sehen. Der Adapter 13 ist als ein flacher kreisförmiger Abschlussdeckel ausgebildet und über die Innenverzahnung 5 am Innenumfang 3 des Abtriebsrads 1 befestigt. Der Außendurchmesser 14 des Adapters 13 ist hierbei annähernd gleich groß wie der Durchmesser des Kopfkreises 11 des Abtriebsrads 1.

Nach der Räumung des Abtriebsrads 1 ist der Adapter 13 auf dem Kopfkreis 11 der Innenverzahnung 5 eingepresst. Der Einpressabschnitt 15, also der Abschnitt, an dem der Adapter 13 am Innenumfang 3 des Abtriebsrads positioniert wird, wird durch die bereits vorhandene Innenverzahnung 5 zur Verfügung gestellt, so dass der Durchmesser des Einpressabschnitts 15 für den Adapter 13 gleich dem Durchmesser des Kopfkreises 11 der Innenverzahnung 5 ist.

Nach dem Einpressen werden das Abtriebsrad 1 und der Adapter 13 miteinander verschweißt. Durch das Verschweißen sind die beiden Bauteile drehfest miteinander verbunden. Das Verschweißen erfolgt hierbei an den Stellen an denen die sich radial nach innen erstreckenden Enden 9 der Zähne 7 den Außenumfang 14 des Adapters 13 kontaktieren. Nachdem Verschweißen verbleibenden Zahnfreiräume 17 zwischen den Zähnen 7 und dem Außenumfang des Adapters 13, die zur Schmierung der Innenverzahnung 5 mit Hydraulikflüssigkeit genutzt werden können.

Fig. 4 zeigt eine Draufsicht auf das Abtriebsrad 1 mit dem Adapter 13 gemäß Fig. 3, in der die Zahnfreiräume 17 zwischen den Zähnen 7 und dem Außenumfang des Adapters 13 deutlich zu erkennen sind. Der Adapter 13 selbst kann aufgrund des Wegfalls eines separaten Einpressabschnitts mit einem Außendurchmesser gefertigt werden, der in etwa dem Durchmesser des Kopfkreises 11 der Innenverzahnung 5 des Abtriebsrads 1 entspricht. Hierdurch kann Material bei der Fertigung des Adapters 13 eingespart werden.

Mittig im Adapter 13 ist eine Zentralbohrung 19 ausgebildet, durch die zur Montage eine Zentralschraube hindurchgeführt werden kann. Diese Zentralschraube kann dann in einem Gewinde an der Stirnseite einer Nockenwelle befestigt werden. Auf diese Weise kann der Adapter 13 drehfest mit einer Nockenwelle verschraubt werden.

Weiterhin ist der Adapter 13 mit zwei Durchtrittsbohrungen 21, 23 ausgebildet, die im eingebauten Zustand der Schmiermittelversorgung des Nockenwellenverstellers bzw. des Verstellgetriebes dienen.

In Fig. 5 ist eine Detailansicht des mit dem Abtriebsteil 1 verschweißten Adapters 13 aus Fig. 3 zu sehen. Anhand dieser Detailansicht ist zu erkennen, dass aufgrund der durchgängigen Ausbildung der Traganteil der Innenverzahnung 5 besonders hoch ist. Da die Innenverzahnung 5 am gesamten Innenumfang 3 des Abtriebsrads 1 ausgebildet ist, liegt der Zahnradauslauf 25 im montierten Zustand axial endseitig hinter dem auf dem Kopfkreis 11 eingepressten Adapter 13.

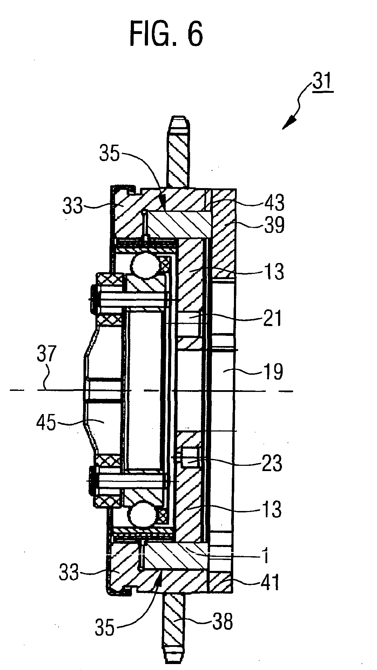

In Fig. 6 ist eine Nockenwellenverstellvorrichtung 31 für eine Brennkraftmaschine mit dem Abtriebsrad 1 und dem Adapter 13 gemäß den Fig. 3 bis 5 in einem Längsschnitt gezeigt. Da in den Fig. 1 bis 5 sowohl das Abtriebsrad 1 als auch der Adapter 13 bereits ausführlich beschrieben wurden, wird an dieser Stelle hierauf verwiesen.

Neben dem Abtriebsrad 1 und dem Adapter 13 weist der Nockenwellenversteller 31 ein Antriebsrad 33 auf, welches wie auch das Abtreibsteil 1 als ein Hohlrad ausgebildet ist. Das Antriebsrad 33 ist über eine Gleitlagerung 35 auf dem Abtriebsrad 1 gelagert. Die beiden Bauteile sind relativ zueinander um eine gemeinsame Drehachse 37 drehbar angeordnet.

Der Antrieb des Nockenwellenverstellers 31 erfolgt im Betrieb über das Antriebsrad 33 und eine nicht gezeigte Kurbelwelle. Das Antriebsrad 33 ist hierzu als ein Kettenrad 38 ausgebildet und kann über eine Kette mit einer Kurbelwelle drehfest verbunden werden. Das Drehmoment wird über einen nicht gezeigten Verstellmotor auf das Antriebsrad 33 und das Abtriebsrad 1 und damit auf die Nockenwelle übertragen. Auf diese Weise wird eine gezielte Verstellung der Phasenlage zwischen der Nockenwelle und der Kurbelwelle erreicht.

Zusätzlich weist die Nockenwellenverstellvorrichtung 31 eine als Anschlagsring ausgebildet Anschlagskomponente 39 auf, die axial am Antriebsrad 33 gegengelagert ist. Die Anschlagskomponente 39 ist mit einer Anschlagsfläche 41 für die Nockenwelle ausgebildet, wodurch eine Drehwinkelbegrenzung zwischen dem Antriebsrad 33 und dem mittels des Adapters 13 drehfest mit der Nockenwelle verbundenen Abtriebsrad 1 erreicht wird. Die Anschlagskomponente 39 ist mit dem Antriebsrad 33 an ihrer axialen Anlagefläche 43 verschweißt und so drehfest mit diesem verbunden.

Die einzelnen Bauteile der Nockenwellenverstellvorrichtung 31 sind schließlich mittels einer Zentralschraube 45 aneinander festgelegt, wobei die Zentralschraube 45 auch durch die Zentralbohrung 19 des Adapters 13 durchreicht.

### Liste der Bezugszahlen

- 1: Abtriebsrad
- 3: Innenumfang
- 5: Innenverzahnung
- 7: Zähne
- 9: Zahnenden
- 11: Kopfkreis
- 12: axiale Breite
- 13: Adapter
- 14: Außenumfang
- 15: Einpressabschnitt
- 17: Zahnfreiräume
- 19: Zentralbohrung
- 21: Durchtrittsbohrung
- 23: Durchtrittsbohrung
- 25: Traganteil
- 31: Verstellvorrichtung
- 33: Antriebsrad
- 35: Gleitlager
- 37: Drehachse
- 38: Kettenrad
- 39: Anschlagskomponente
- 41: Anlagefläche
- 43: Anschlagsfläche
- 45: Zentralschraube

## Patentansprüche

1. Nockenwellenversteller (31) für eine Brennkraftmaschine, umfassend ein mit einer Kurbelwelle drehfest verbindbares Antriebsrad (33), ein relativ zu diesem um eine Drehachse (37) drehbar angeordnetes, innenverzahntes Abtriebsrad (1), sowie einen Adapter (13), der am Innenumfang (3) des Abtriebsrads (1) angeordnet ist und über den das Abtriebsrad (1) drehfest mit einer Nockenwelle verbindbar ist,
**dadurch gekennzeichnet, dass**
der Adapter (13) über die Innenverzahnung (5) am Innenumfang (3) des Abtriebsrads (1) befestigt ist.

2. Nockenwellenversteller (31) nach Anspruch 1,
**dadurch gekennzeichnet, dass**
der Adapter (13) auf dem Kopfkreis (11) der Innenverzahnung (5) in das Abtriebsrad (1) eingepresst ist.

3. Nockenwellenversteller (31) nach Anspruch 1 oder 2,
**dadurch gekennzeichnet, dass**
die Innenverzahnung (5) axial durchgängig am Abtriebsrad (1) ausgebildet ist.

4. Nockenwellenversteller (31) nach einem der vorhergehenden Ansprüche,
**dadurch gekennzeichnet, dass**
der Adapter (13) mit dem Abtriebsrad (1) verschweißt ist.

5. Nockenwellenversteller (31) nach einem der vorhergehenden Ansprüche,
**dadurch gekennzeichnet, dass**
der Adapter (13) als ein Abschlussdeckel ausgebildet ist.

6. Nockenwellenversteller (31) nach einem der vorhergehenden Ansprüche,
**dadurch gekennzeichnet, dass**
das Antriebsrad (33) als ein Hohlrad ausgebildet und auf dem Abtriebsrad (1) gelagert ist.

7. Nockenwellenversteller (31) nach einem der vorhergehenden Ansprüche,
**dadurch gekennzeichnet, dass**
eine Anschlagskomponente (39) für eine Nockenwelle umfasst ist, die axial am Antriebsrad (33) gegengelagert ist.

8. Nockenwellenversteller (31) nach Anspruch 8,
**dadurch gekennzeichnet, dass**
die Anschlagskomponente (39) und das Antriebsrad (33) zumindest teilweise miteinander verschweißt sind.

## Claims

1. Camshaft adjuster (31) for an internal combustion engine, comprising a drive gear (33) which can be connected fixedly to a crankshaft so as to rotate with it, an internally toothed output gear (1) which is arranged such that it can be rotated about a rotational axis (37) relative to the said drive gear (33), and an adapter (13) which is arranged on the inner circumference (3) of the output gear (1) and via which the output gear (1) can be connected fixedly to a camshaft so as to rotate with it, **characterized in that** the adapter (13) is fastened via the internal toothing system (5) on the inner circumference (3) of the output gear (1).

2. Camshaft adjuster (31) according to Claim 1, **characterized in that** the adapter (13) is pressed into the output gear (1) on the tip circle (11) of the internal toothing system (5).

3. Camshaft adjuster (31) according to Claim 1 or 2, **characterized in that** the internal toothing system (5) is formed axially continuously on the output gear (1).

4. Camshaft adjuster (31) according to one of the preceding claims, **characterized in that** the adapter (13) is welded to the output gear (1).

5. Camshaft adjuster (31) according to one of the preceding claims, **characterized in that** the adapter (13) is configured as a closure cover.

6. Camshaft adjuster (31) according to one of the preceding claims, **characterized in that** the drive gear (33) is configured as an internal gear and is mounted on the output gear (1).

7. Camshaft adjuster (31) according to one of the preceding claims, **characterized in that** a stop component (39) for a camshaft is included which is counter-mounted axially on the drive gear (33).

8. Camshaft adjuster (31) according to Claim 8, **characterized in that** the stop component (39) and the drive gear (33) are welded at least partially to one another.

## Revendications

1. Dispositif de réglage d'arbre à cames (31) pour un moteur à combustion interne, comprenant une roue d'entraînement (33) pouvant être connectée de manière solidaire en rotation à un vilebrequin, une roue de sortie (1) à denture interne disposée de manière à pouvoir tourner autour d'un axe de rotation (37) par rapport à la roue d'entraînement, ainsi qu'un adaptateur (13), qui est disposé sur la périphérie interne (3) de la roue de sortie (1) et par le biais duquel la roue de sortie (1) peut être connectée de manière solidaire en rotation à un arbre à cames,
**caractérisé en ce que**
l'adaptateur (13) est fixé par le biais de la denture interne (5) à la périphérie interne (3) de la roue de sortie (1).

2. Dispositif de réglage d'arbre à cames (31) selon la revendication 1,
**caractérisé en ce que**
l'adaptateur (13) est pressé sur le cercle de tête (11) de la denture interne (5) dans la roue de sortie (1).

3. Dispositif de réglage d'arbre à cames (31) selon la revendication 1 ou 2,
**caractérisé en ce que**
la denture interne (5) est réalisée sous forme continue axialement sur la roue de sortie (1).

4. Dispositif de réglage d'arbre à cames (31) selon l'une quelconque des revendications précédentes,
**caractérisé en ce que**
l'adaptateur (13) est soudé à la roue de sortie (1).

5. Dispositif de réglage d'arbre à cames (31) selon l'une quelconque des revendications précédentes,
**caractérisé en ce que**
l'adaptateur (13) est réalisé sous forme de couvercle de terminaison.

6. Dispositif de réglage d'arbre à cames (31) selon l'une quelconque des revendications précédentes,
**caractérisé en ce que**
la roue d'entraînement (33) est réalisée sous forme de couronne et est supportée sur la roue de sortie (1).

7. Dispositif de réglage d'arbre à cames (31) selon l'une quelconque des revendications précédentes,
**caractérisé en ce**
**qu'**un composant de butée (39) pour un arbre à cames est prévu, lequel est contrebalancé axialement sur la roue d'entraînement (33).

8. Dispositif de réglage d'arbre à cames (31) selon la revendication 8,
**caractérisé en ce que**
le composant de butée (39) et la roue d'entraînement (33) sont au moins en partie soudés l'un à l'autre.
